# EUROPEAN PATENT SPECIFICATION

(11) **EP 1 993 346 B1**
(45) Date of publication and mention of the grant of the patent: **05.08.2009**
(21) Application number: 06745232.6
(22) Date of filing: 13.03.2006
(51) Int. Cl.: A01G 3/00, B02C 18/00

(54) **CRUSHING ELEMENT FOR AGRICULTURAL, INDUSTRIAL AND OTHER TYPES OF MACHINES**
BRECHELEMENT FÜR LANDWIRTSCHAFTS-, INDUSTRIE- UND ANDERE ARTEN VON MASCHINEN
ELEMENT BROYEUR POUR MACHINES AGRICOLES, INDUSTRIELLES ET AUTRES TYPES DE MACHINES

(43) Date of publication of application: 26.11.2008
(73) Proprietor: Tierre S.r.l., 35010 Curtarolo (PD) (IT)
(72) Inventor: TISO, Aldo, 35010 CURTAROLO (PD) (IT)
(74) Representative: Vinci, Marcello
(86) International application number: PCT/IT2006/000148
(87) International publication number: WO 2007/105235

(56) References cited:
- EP-A2- 0 228 002
- DE-U1- 8 502 956
- SU-A1- 965 395
- US-A- 5 657 933
- US-A- 5 819 825

## Description

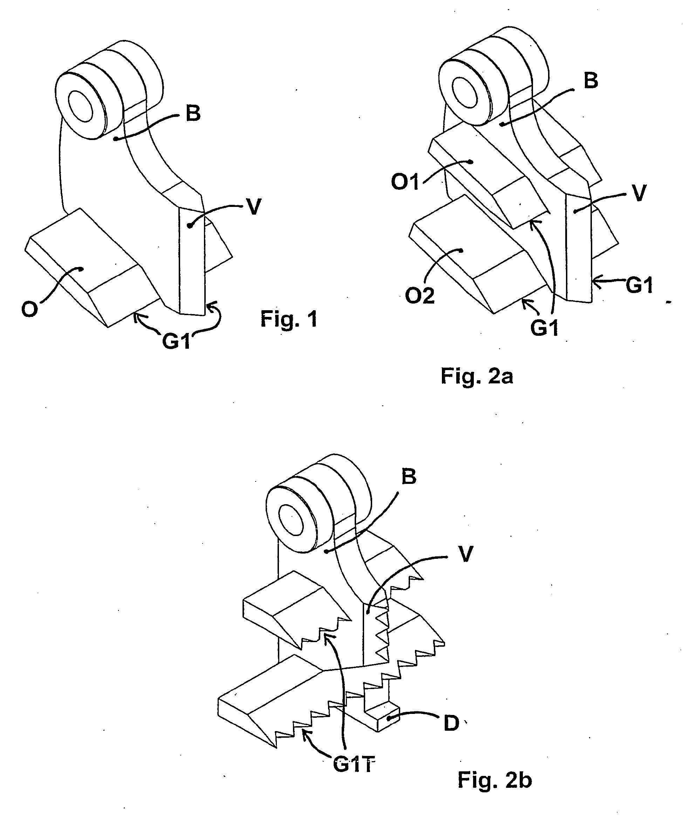

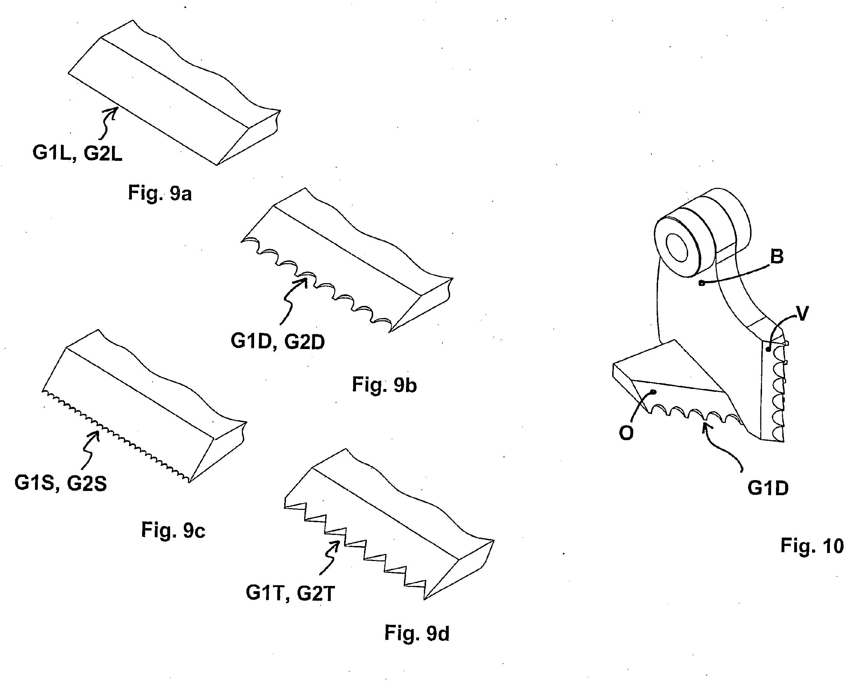

The present patent concerns the cutting tools of brush cutters, of bioshredders, of choppers and shredders for grass, twigs and pruning residues of all sorts, such as leaves, corn stalks and cobs, and of all machines capable of crushing products, even in fields other than the agricultural one. In particular the patent concerns a new cutting tool, hereinafter referred to as crushing hammer, with multi-directional cutting edges and with the cutting blade on one side only or on the back and front sides of the cutting edge (Figures 1-8, 11a-c). The cutting blade can have a linear (Figures 1-8, 9a), toothed or irregular profile (Figures 9b, 9c, 9d, 10, 11a-d).

The new crushing hammer with multi-directional cutting edges and blade on both sides, front and back, is reversible. This characteristic allows the crushing hammer to be used twice before having to replace it, with a considerable profit for the user. In fact first one operates with the front blades of the crushing hammer until these are worn out, then the crushing hammer is removed from the fixing arm or plate, it is turned round so that the unused cutting edges are brought into the operational position and can be used until they are worn out. When the crushing hammer is turned round to employ the unused rear blades, the same position of the crushing hammer on the rotor shaft must be maintained, because in this way the balance of the rotor shaft is maintained.

Chopping machines are known, commonly used in the farming sector to cut and remove from the soil the plant residues of previous crops and general pruning residues.

Shredding machines are also known, used for crushing and shredding pruning residues, branches, leaves, twigs, etc. Even the known bioshredders, like the chopping machines, are equipped with rotor shafts and cutting tools.

The known shredders essentially consist of a metal chassis, supporting one or more rotor shafts placed horizontally, vertically or diagonally with respect to the soil and orthogonal to the advancing direction of the machine. Said rotor shafts can be applied on towed or self-propelled machines, for example even trailers.

With the aid of supports, the cutting tools are fitted to the rotor shafts, which set the cutting tools rotating crushing hammers are known from document DE 8502956 UI.

To improve and reduce the number of working cycles, a new type of crushing hammer with multi-directional and reversible cutting edges on both sides has been designed and implemented. The main purpose of the present artefact is to crush efficiently and quickly the material introduced in the machine; it also carries out minute crushing, does not cause machine jamming and reduces the working times.

The new crushing hammer can be applied to:
- brush cutters, bioshredders, choppers and shredders for grass, twigs and pruning residues of all sorts, organic and vegetable waste;
- machines that chop and shred grass, branches, corn stalks and cobs, wood of all sorts;
- machines that shred gardening residues;
- self-propelled machines, machines with 3-point hitch, towed machines and machines fitted with any sort of engine (hydraulic, internal combustion, diesel engines);
- any other type of machine capable of crushing products, even in fields other than the agricultural one;
- bioshredders for disintegrating organic waste to produce high quality "humus", since the new crushing hammer can shred the product very finely;
- in the industrial field on machines for shredding various types of materials, such as garbage, furniture, packages, assorted refuse and cardboard. These and other direct and complementary purposes are achieved through the implementation of the new crushing hammer with reversible and multi-directional cutting edges on both sides. The present artefact comprises a crushing hammer according to claim 1.
Said artefact comprises:
- a single body obtained by casting and/or pressing;
- vertical and/or horizontal and/or inclined cutting edges welded together or coupled together with fixing elements, such as screws or rivets. As shown in Figures 1, 2a, 2b, 3, 4, 5, 6, 7, 8, 11a-d, one or more of said vertical cutting edges (V1, V2, ..., Vn) and/or one or more of said horizontal cutting edges (O1, O2, ..., On) and/or one or more of said inclined cutting edges (T1, T2, ..., Tn) of the various types of crushing hammers previously described may comprise a front cutting blade (G1) and/or a rear cutting blade (G2), with respect to the rotation direction of the hammer.

Said front (G1) and rear (G2) cutting blades can be:
- with linear profile (G1L, G2L), as shown in Figure 9a;
- with toothed profile (G1D, G2D), as shown in Figure 9b;
- with serrated profile, as shown in Figure 9c, with small teeth (C1S, G2S), and/or as shown in Figure 9d, with for example triangular teeth (G1T, G2T);
- with irregular profile or profile in various shapes.

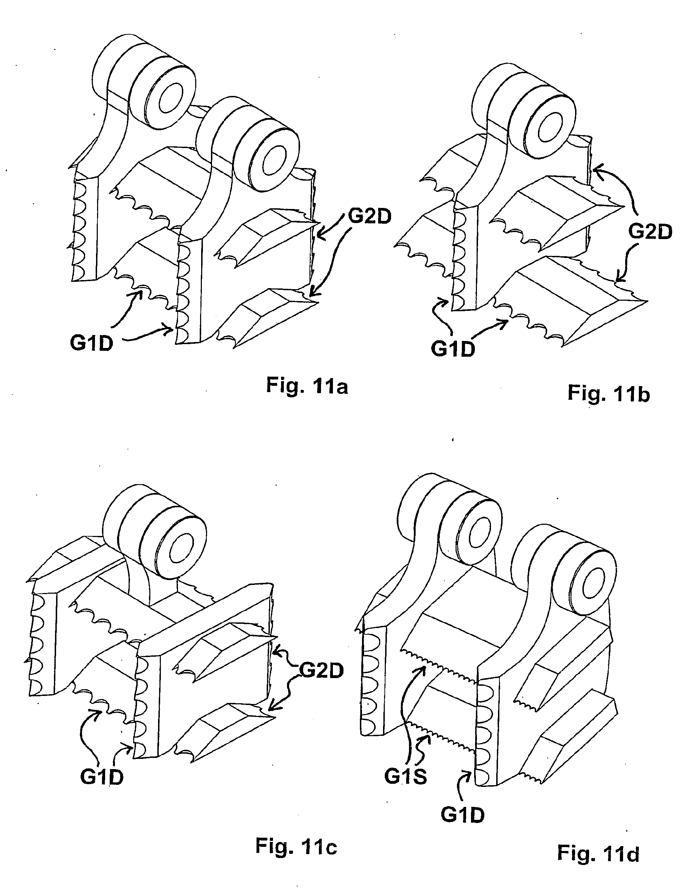

The following Figures 10, 11a-d, represent, as examples, five of the possible manufacturing solutions for new crushing hammers with one or more of said toothed cutting blades (G1D, G2D) and/or serrated cutting blades (G1S, G2S).

The present artefact must be manufactured from material capable of resisting the required working processes and suitable for welding.

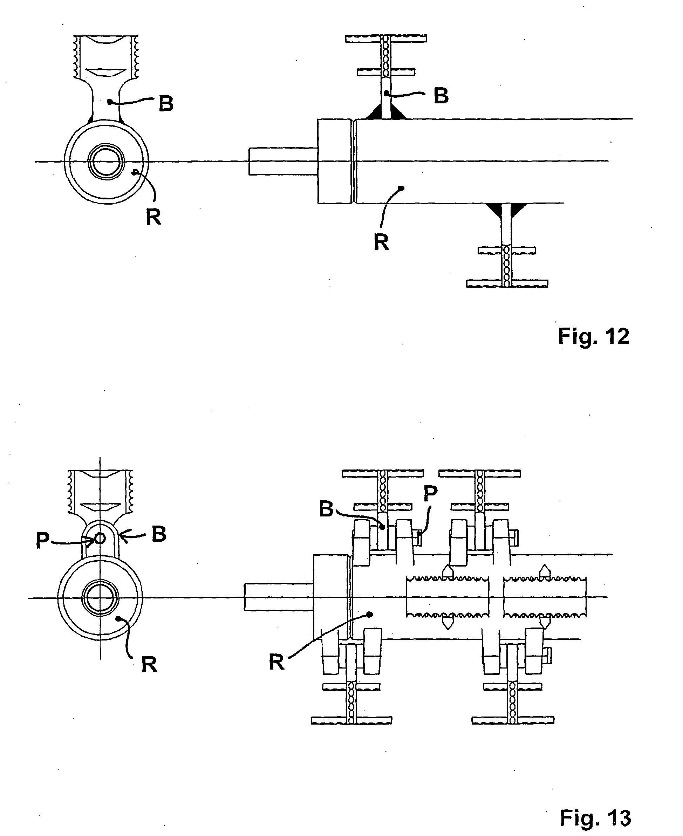

The fixing arm or plate of the new crushing hammer can be:
- articulated with pivot: it allows the new crushing hammer to swing around the arm pivot or the fixing plate when the rotor shaft turns (Figure 13). As shown in Figure 13, said fixing arm or plate (B) is articulated, having at least one pivot (P) for connection to said rotor shaft (R);
- fixed and/or welded onto the rotor shaft: the new crushing hammer is integral with the rotor and does not swing during the rotation of the rotor shaft (Figure 12). As shown in Figure 12, said fixing arm or plate (B) is fastened and/or welded to said rotor shaft (R).

The following part describes the preferred embodiments of said new crushing hammer with reversible and multi-directional cutting edges on two sides. Note that the Figures from 1 to 3 attached herewith show three-dimensional views of various possible technical solutions of the new crushing hammer. Said figures are to be considered exclusively indicative and are given purely as an example without limitation.

EMBODIMENT 1: reference figure 1;

Said new crushing hammer has two cutting edges arranged orthogonally to each other, preferably in a T or a cross. One of said cutting edges (V) is arranged vertically, i.e. radial to said rotor shaft, whereas the other cutting edge (O) is arranged horizontally, i.e. parallel to said rotor shaft.

EMBODIMENTS 2-3: reference figures 2a and 2b, 3, 8;

According to a further embodiment of the invention, the new crushing hammer has a central vertical cutting edge (V), arranged radial to the rotor shafts, and two or more horizontal cutting edges (O1, O2, ... On, where n is a number higher than or equal to 1), where the cutting edges have the same or different lengths.

Applied to the lower edge/s of said vertical cutting edge (V) there is a tooth (D) for the expulsion of foreign bodies (Figure 2b - part D).

As shown in Figures 1, 2 and 3, the new crushing hammer comprises at least one arm or vertical plate (B) for fixing to the rotor shaft of the machine, a central vertical cutting edge, substantially coplanar with said fixing arm or plate (B), and one or more horizontal cutting edges (O1, O2, ..., On, where n is a number higher than or equal to 1), i.e. arranged orthogonally to said fixing arm or plate (B), and where said vertical cutting edges (V) and horizontal cutting edges (O1, O2, ..., On) are integral with said fixing arm or plate (B).

The vertical cutting edges (V) and the horizontal cutting edges (O1, O2, ..., On) are equipped with one or more cutting blades (G1, G2), a front one (G1) and a back one (G2).

In particular, said central vertical cutting edge (V) is machined on the front and/or rear side of said fixing arm or plate (B).

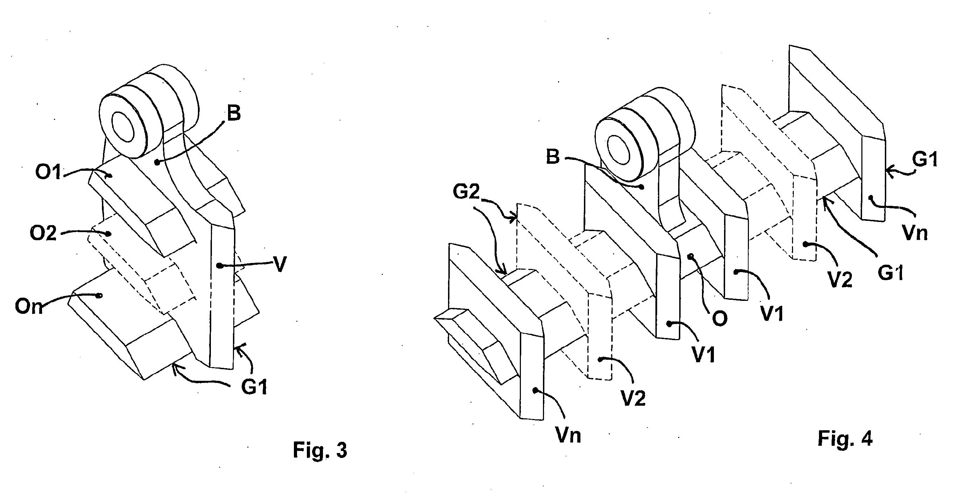

EMBODIMENT 4: reference figure 4;

According to a further alternative solution, the new crushing hammer is equipped with a horizontal cutting edge (O), i.e. placed parallel to the axis of rotation, and two or more vertical cutting edges (V1, V2, ..., Vn), orthogonal to said horizontal cutting edge (O) and placed symmetrically to said fixing arm or plate (B). The cutting edges can have the same length or different lengths. The cutting edges have one or more cutting blades (G1, G2), a front one (G1) and a back one (G2).

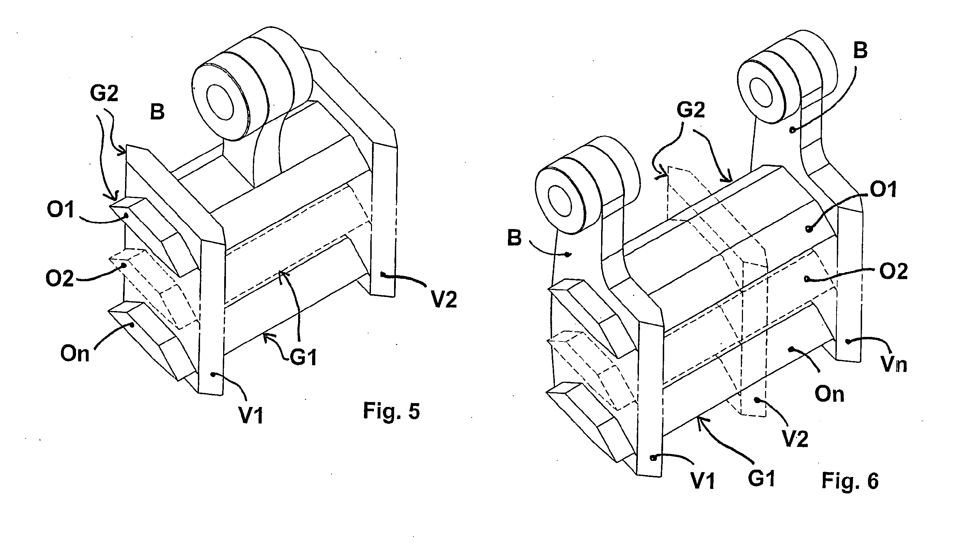

EMBODIMENT 5: reference figures 5 and 6;

According to a further alternative solution, the new crushing hammer is equipped with one or more horizontal cutting edges (O1, O2, ..., On), i.e. parallel to the axis of rotation, and two or more vertical cutting edges (V1, V2, ..., Vn), orthogonal or inclined with respect to said horizontal cutting edges (O1, O2, ..., On) and placed symmetrically with respect to said fixing arm or plate (B), so that said horizontal and vertical cutting edges form one or more quadrangular meshes.

In the solution shown in Figure 6, the new crushing hammer comprises two or more fixing arms or plates (B), two or more horizontal cutting edges (O1, O2, ..., On) and two or more vertical cutting edges (V1, V2, ..., Vn), where each one of said vertical cutting edges (V1, V2, ..., Vn) is machined on the front and/or rear advanced side of each of said fixing arms or plates (B). The cutting edges can have the same length or different lengths. The cutting edges have one or two cutting blades, a front one (G1) and a back one (G2).

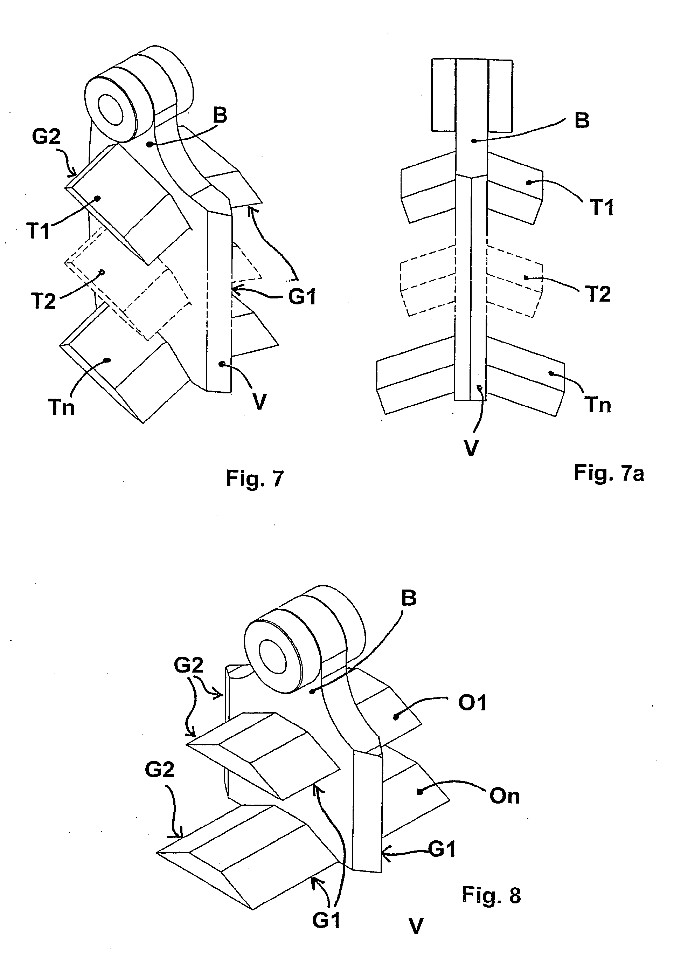

EMBODIMENT 6: reference figures 7 and 7a

According to a further solution, the new crushing hammer comprises a central vertical cutting edge (V), substantially coplanar with said fixing arm or plate (B), and one or more cutting edges (T1, T2, ..., Tn) placed transversely to said vertical cutting edge (V) and forming an angle different from 90° with this. In particular, said cutting edges (T1, T2, ..., Tn) are arranged as an upturned V and each one of the two pitches that form such cutting edges (T1, T2, ..., Tn) form a non-orthogonal angle with the plane on which said vertical cutting edge (V) lies. Even said inclined cutting edges (T1, T2, ..., Tn) have the cutting blade (G1, G2) on one or two sides. The cutting edges can have the same length or different lengths.

EMBODIMENT 7: reference figure 10;

According to a further manufacturing solution, as exemplified in Figure 10, said horizontal cutting edge/s (O), (O1, O2, ..., On) and/or said inclined cutting edges (T1, T2, ..., Tn) have an oblique cutting blade (G1) and/or (G2), set back with respect to said vertical cutting edge (V).

In this way, during the rotation of the hammer the cutting and crushing action of the cutting blade (G1) and/or (G2) is exploited to the maximum, in particular in the case of the toothed cutting blade (G1D) and/or (G2D), of the serrated cutting blade (G1S, G2S) and of other types of irregular or variously shaped cutting blades.

The vertical cutting edge/s (V) of the new crushing hammer, in the operating phase remove any stones that may be in the soil and, owing to the fact that it projects with respect to the horizontal and/or inclined cutting edges (O and/or T), protects the horizontal and/or inclined cutting edges (O and/or T) from wear.

The present artefact has cutting edges arranged in at least two or more directions, in such a way as to be able to cut and crush all products, whatever position these happen to be in once they have been introduced in the machine. The solutions described above have been studied to avoid jamming caused by the product or by non-crushed product residues that could prevent the correct rotation of the rotor shaft.

In substance, the new crushing hammer described herein makes it possible to achieve optimal results, never obtained before by means of known hammers, as it produces less consistent residues, in less time and with less power costs.

Furthermore, during trials on the field with the new crushing hammer, it has been noticed that the material is crushed into smaller parts and in less time than when using the known cutting tools, with consequent considerable time saving.

In this way the power consumption and the wear of the cutting tools or crushing hammers are limited and therefore they can be used for longer periods of time.

Consequently, with reference to the above description and to the attached drawings, the following claims are made.

## Claims

1. Crushing hammer for brush cutters, bioshredders, choppers and shredders for grass, twigs and pruning residues in general, organic and non-organic waste, packaging, furniture, cardboard, with one or more supports for fixing to one or more rotor shafts of said machines, **characterised in that** it comprises cutting edges (V, O) integral with said fixing arm or plate (B), and wherein said cutting edges (V, O) lie on different intersecting planes.

2. Crushing hammer according to claim 1, **characterised in that** one or more of said cutting edges (V) are arranged vertically, i.e. orthogonally to the axis of rotation of said hammer, and ore or more further cutting edges (O) are arranged horizontally, i.e. parallel to the axis of rotation of said hammer, and wherein said cutting edges (V) and (O) are arranged in a T o crossed over.

3. Crushing hammer according to claims 1, 2, **characterised in that** it comprises a vertical cutting edge (V) in a substantially central position and coplanar with said fixing arm or plate (B), and one or more horizontal cutting edges (O1, O2, ..., On), and wherein said cutting edges can have the same or different dimensions.

4. Crushing hammer according to claims 1, 2, 3, **characterised in that** it comprises a horizontal cutting edge (O) and two or more vertical cutting edges (V1, V2, ..., Vn).

5. Crushing hammer according to claims 1, 2, 3, **characterised in that** it comprises at least two or more horizontal cutting edges (O1, O2, ..., On) and at least two or more vertical cutting edges (V1, V2, ..., Vn).

6. Crushing hammer according to claim 2;
**characterised in that** said vertical cutting edges (V1, V2, ..., Vn) are placed symmetrically with respect to one or more of said fixing arm/s or plate/s (B).

7. Crushing hammer according to claim 1, **characterised in that** it comprises a vertical cutting edge (V) in a substantially central position, coplanar with said fixing arm or plate (B), and one or more cutting edges (T1, T2, ..., Tn) lying on one or more planes that intersect the plane on which said vertical cutting edge (V) lies and are not orthogonal to this.

8. Crushing hammer according to claim 2 to 7,
**characterised in that** one or more of said vertical cutting edges (V), (V1, V2, ..., Vn) and/or one or more of said horizontal cutting edges (O), (O1, O2, ..., On) and/or one or more of said inclined cutting edges (T1, T2, ..., Tn) comprise one or two cutting blades, of which one (G1) is on the front side and/or one (G2) is on the rear side with respect to the rotation direction of said crushing hammer.

9. Crushing hammer according to claims 2 to 8, **characterised in that** in correspondence with the front and/or rear lower end of one or more of said vertical cutting edges (V), (V1, V2, ..., Vn) a tooth (D) for the expulsion of foreign bodies is machined.

10. Crushing hammer according to claim 8,
**characterised in that** said cutting blade/s has/have a linear profile (G1L, G2L).

11. Crushing hammer according to claim 8 or 9,
**characterised in that** said cutting blade/s ((G1) and/or (G2)) has/have a toothed profile (G1D, G2D) and/or a serrated profile (G1S, G2S), (G1T, G2T) and/or an irregular profile and/or a variously shaped profile.

12. Crushing hammer according to claim 8, 9 or 10,
**characterised in that** said cutting blade/s (G1) and/or (G2) of one or more of said horizontal cutting edges (O), (O1, O2, ..., On) and/or of one or more of said inclined cutting edges (T1, T2, ..., Tn) is/are oblique and set back with respect to said vertical cutting edge (V).

13. Crushing hammer according to claims 2 to 12,
**characterised in that** one or more of said vertical cutting edges (V), (V1, V2, ..., Vn) is machined onto the advanced front and/or rear side of said fixing arm/s or plate/s (B).

14. Crushing hammer according to one or more of the previous claims,
**characterised in that** said fixing arm/s or plate/s (B) is/are articulated and comprises/comprise at least one pin (P) for the swinging of said crushing hammer.

15. Crushing hammer according to one or more of the previous claims,
**characterised in that** said fixing arm/s or plate/s (B) is/are integral with the corresponding rotor shaft (R) and welded to it.

16. Crushing hammer according to the previous claims, **characterised in that** it is a single body obtained by casting and/or pressing and/or welding of one or more components.

## Patentansprüche

1. Zerkleinerungskopf für Buschschneider, Bioshredder, Häcksler und Shredder für Gras, Zweige und Aufastungsrückstände im Allgemeinen, organische und nicht organische Abfälle, Verpackungen, Möbel und Kartons mit einem oder mehreren Trägern zur Befestigung an einer oder mehreren Rotorwellen dieser Maschinen, **dadurch gekennzeichnet, dass** er Schneideklingen (V, O) umfasst, die fest mit dem Befestigungsarm oder der Befestigungsplatte (B) verbunden sind, wobei die Schneideklingen (V, O) auf unterschiedlichen, sich schneidenden Ebenen liegen.

2. Zerkleinerungskopf nach Anspruch 1, **dadurch gekennzeichnet, dass** eine oder mehrere der Schneideklingen (V) vertikal, d.h. orthogonal zur Drehachse des Kopfs, angeordnet sind und eine oder mehrere zusätzliche Schneideklingen (O) horizontal, d.h. parallel zur Drehachse des Kopfs, angeordnet sind, wobei die Schneideklingen (V) und (O) in einem T oder überkreuzt angeordnet sind.

3. Zerkleinerungskopf nach Anspruch 1 oder 2, **dadurch gekennzeichnet, dass** er eine vertikale Schneideklinge (V) in einer im Wesentlichen mittigen Position und koplanar mit dem Befestigungsarm oder der Befestigungsplatte (B) und eine oder mehrere horizontale Schneideklingen (O1, O2,
... , On) umfasst, wobei die Schneideklingen die gleichen oder unterschiedliche Abmessungen aufweisen können.

4. Zerkleinerungskopf nach Anspruch 1, 2 oder 3, **dadurch gekennzeichnet, dass** er eine horizontale Schneideklinge (O) und zwei oder mehr vertikale Schneideklingen (V1, V2, ..., Vn) umfasst.

5. Zerkleinerungskopf nach Anspruch 1, 2 oder 3, **dadurch gekennzeichnet, dass** er mindestens zwei oder mehr horizontale Schneideklingen (O1, O2, ..., On) und mindestens zwei oder mehr vertikale Schneideklingen (V1, V2, ..., Vn) umfasst.

6. Zerkleinerungskopf nach Anspruch 2, **dadurch gekennzeichnet, dass** die vertikalen Schneideklingen (V1, V2, ..., Vn) in Bezug auf eine(n) oder mehrere der Befestigungsarm(e) oder -platte(n) (B) symmetrisch angeordnet sind.

7. Zerkleinerungskopf nach Anspruch 1, **dadurch gekennzeichnet, dass** er eine vertikale Schneideklinge (V) in einer im Wesentlichen mittigen Position, koplanar mit dem Befestigungsarm oder der Befestigungsplatte (B), und eine oder mehrere Schneideklingen (T1, T2, ..., Tn) umfasst, die auf einer oder mehreren Ebenen liegen, die die Ebene, auf der die vertikale Schneideklinge (V) liegt, schneiden und nicht orthogonal zu dieser sind.

8. Zerkleinerungskopf nach einem der Ansprüche 2 bis 7, **dadurch gekennzeichnet, dass** eine oder mehrere der vertikalen Schneideklingen (V1, V2, ..., Vn) und/oder eine oder mehrere der horizontalen Schneideklingen (O1, O2, ..., On) und/oder eine oder mehrere der geneigten Schneideklingen (T1, T2, ..., Tn) eine oder zwei Schneidkanten umfassen, von denen eine (G1) an der Vorderseite und/oder eine (G2) an der Rückseite, bezogen auf die Drehrichtung des Zerkleinerungskopfs, angeordnet ist.

9. Zerkleinerungskopf nach einem der Ansprüche 2 bis 8, **dadurch gekennzeichnet, dass** ein Zahn (D) zum Ausstoßen von Fremdkörpern am vorderen und/oder hinteren unteren Ende von einer oder mehreren der vertikalen Schneideklingen (V1, V2, ..., Vn) herausgearbeitet ist.

10. Zerkleinerungskopf nach Anspruch 8, **dadurch gekennzeichnet, dass** die Schneidkante(n) ein lineares Profil (G1L, G2L) aufweist/aufweisen.

11. Zerkleinerungskopf nach Anspruch 8 oder 9, **dadurch gekennzeichnet, dass** die Schneidkante(n) ((G1) und/oder (G2)) ein gezahntes Profil (G1D, G2D) und/oder ein sägeartiges Profil (G1S, G2S), (G1T, G2T) und/oder ein unregelmäßiges Profil und/oder ein verschieden geformtes Profil aufweist/aufweisen.

12. Zerkleinerungskopf nach Anspruch 8, 9 oder 10, **dadurch gekennzeichnet, dass** die Schneidkante(n) (G1) und/oder (G2) von einer oder mehreren der horizontalen Schneideklingen (O1, O2, ..., On) und/oder von einer oder mehreren der geneigten Schneideklingen (T1, T2, ..., Tn) schräg und nach hinten versetzt, bezogen auf die vertikale Schneideklinge (V), ist/sind.

13. Zerkleinerungskopf nach einem der Ansprüche 2 bis 12, **dadurch gekennzeichnet, dass** eine oder mehrere der vertikalen Schneideklingen (V), (V1, V2, ..., Vn) an der vorgeschobenen Vorder- und/oder Rückseite des/der einen oder der mehreren Befestigungsarme oder -platten (B) ausgearbeitet sind.

14. Zerkleinerungskopf nach einem oder mehreren der vorangegangenen Ansprüche, **dadurch gekennzeichnet, dass** der/die Befestigungsarm(e) oder
- platte(n) (B) gelenkig angebracht ist/sind und mindestens einen Zapfen (P) zum Schwingen des Zerkleinerungskopfs umfasst/umfassen.

15. Zerkleinerungskopf nach einem oder mehreren der vorangegangenen Ansprüche, **dadurch gekennzeichnet, dass** der/die Befestigungsarm(e) oder
- platte(n) (B) fest mit der entsprechenden Rotorwelle (R) verbunden und an dieser angeschweißt ist/sind.

16. Zerkleinerungskopf nach einem der vorangegangenen Ansprüche, **dadurch gekennzeichnet, dass** er ein einzelner Körper ist, der durch Gießen und/oder Pressen und/oder Schweißen von einem oder mehreren Bestandteilen hergestellt ist.

## Revendications

1. Marteau de broyeur pour débroussailleuses, bio-déchiqueteuses, hacheuse et déchiqueteuse pour herbe, sarments et en général résidus d'élagage, déchets organiques et non organiques, emballages, meubles, cartons, avec un ou plusieurs supports de fixation à un ou plusieurs arbres rotor desdites machines, **caractérisé en ce qu'**il comprend des tranchants (V, O), solidaires dudit bras ou plaque (B) de fixation, et où lesdits tranchants (V, O) reposent sur des plans d'intersection.

2. Marteau de broyeur selon la revendication 1, **caractérisé en ce qu'**un ou plusieurs desdits tranchants (V) sont positionnés verticalement, c'est-à-dire orthogonalement par rapport à l'axe de rotation dudit marteau, et un ou plusieurs ultérieurs tranchants (O) sont positionnés horizontalement, c'est-à-dire parallèlement par rapport à l'axe de rotation dudit marteau, et où lesdits tranchants (V) et (O) sont positionnés en forme de T ou croisés.

3. Marteau de broyeur selon les revendications 1, 2, **caractérisé en ce qu'**il comprend un tranchant vertical (V) dans une position essentiellement centrale et coplanaire avec ledit bras ou plaque (B) de fixation, et un ou plusieurs tranchants horizontaux (O1, O2, ...., On) et où lesdits tranchants peuvent avoir la même dimension ou de différentes dimensions.

4. Marteau de broyeur selon les revendications 1, 2, 3, **caractérisé en ce qu'**il comprend un tranchant horizontal (O) et deux ou plusieurs tranchants verticaux (V1, V2, ..., Vn).

5. Marteau de broyage selon les revendications 1, 2, 3, **caractérisé en ce qu'**il comprend au moins deux ou plusieurs tranchants horizontaux (O1, O2, ...., On) et au moins deux ou plusieurs tranchants verticaux (V1, V2, ..., Vn).

6. Marteau de broyeur selon la revendication 2, **caractérisé en ce que** lesdits tranchants verticaux (V1, V2, ..., Vn) sont positionnés symétriquement par rapport à un ou plusieurs desdits bras ou plaque/s (B) de fixation.

7. Marteau de broyeur selon la revendication 1, **caractérisé en ce qu'**il comprend un tranchant vertical (V) dans une position essentiellement centrale, coplanaire par rapport audit bras ou plaque (B) de fixation, et un ou plusieurs tranchants (T1, T2, ..., Tn) se reposant sur un ou plusieurs plans qui croisent le plan sur lequel ledit tranchant vertical (V) repose et ne sont pas orthogonaux à celui-ci.

8. Marteau de broyeur selon les revendications de 2 à 7, **caractérisé en ce qu'**un ou plusieurs desdits tranchants verticaux (V), (V1, V2, ..., Vn) et/ou un ou plusieurs desdits tranchants horizontaux (O), (O1, O2, ..., On) et/ou un ou plusieurs desdits tranchants inclinés (T1, T2, ..., Tn) comprennent une ou deux lames de coupe, desquelles une (G1) se trouve sur le côté avant et/ou une (G2) se trouve sur le côté arrière par rapport à la direction de rotation dudit marteau de broyage.

9. Marteau de broyeur selon les revendications de 2 à 8, **caractérisé en ce qu'**à hauteur de l'extrémité inférieure avant et/ou arrière d'un ou plusieurs desdits tranchants verticaux (V), (V1, V2, ..., Vn) se trouve une dent (D) pour l'expulsion de corps étrangers.

10. Marteau de broyeur selon la revendication 8, **caractérisé en ce que** ladite/lesdites lame/s de coupe présente/présentent un profil linéaire (G1L, G2L).

11. Marteau de broyeur selon la revendication 8 ou 9, **caractérisé en ce que** ladite/lesdites lame/s de coupe ((G1) et/ou (G2)) présente/présentent un profil denté (G1D, G2D) et/ou un profil dentelé (G1S, G2S), (G1T, G2T) et/ou un profil irrégulier et/ou un profil différemment galbé.

12. Marteau de broyeur selon les revendications 8, 9 ou 10, **caractérisé en ce que** ladite/lesdites lame/s de coupe (G1) et/ou (G2) d'un ou plusieurs desdits tranchants horizontaux (O), (O1, O2, ..., On) et/ou d'un ou plusieurs desdits tranchants inclinés (T1, T2, ..., Tn) est/sont oblique/s et reculé/s par rapport audit tranchant vertical (V).

13. Marteau de broyeur selon les revendications de 2 à 12, **caractérisé en ce qu'**un ou plusieurs desdits tranchants verticaux (V), (V1, V2, ..., Vn) sont réalisés sur le bord avant et/ou arrière avancé dudit/desdits bras ou plaque/s (B) de fixation.

14. Marteau de broyeur selon l'une ou plusieurs des revendications précédentes, **caractérisé en ce que** ledit/lesdits bras ou plaque/s (B) de fixation est/sont articulé/s et comprend/comprennent au moins un pivot (P) pour l'oscillation dudit marteau de broyage.

15. Marteau de broyeur selon l'une ou plusieurs des revendications précédentes, **caractérisé en ce que** ledit/lesdits bras ou plaque/s (B) de fixation est/sont solidaire/s de l'arbre rotor correspondant (R) et soudé/s à celui-ci.

16. Marteau de broyeur selon les revendications précédentes, **caractérisé en ce qu'**il est un corps unique obtenu par moulage et/ou pressage et/ou soudage d'un ou plusieurs composants.
